# EUROPÄISCHE PATENTANMELDUNG

(11) **EP 4 084 449 A1**
(43) Veröffentlichungstag der Anmeldung: **02.11.2022**
(21) Anmeldenummer: 21170405.1
(22) Anmeldetag: 26.04.2021
(51) Int. Cl.: H04M 1/72421

(54) **VERFAHREN ZUR UNTERSTÜTZUNG EINES NUTZERS NACH EINEM VERKEHRSEREIGNIS**

(71) Anmelder: Ganzha, Dmitry, 1180 Wien (AT)
(72) Erfinder: Ganzha, Dmitry, 1180 Wien (AT)
(74) Vertreter: Rupprecht, Kay

(57) **Zusammenfassung**

Es wird ein von einem mobilen Endgerät (4) ausgeführtes Verfahren (2) zur Unterstützung eines Nutzers nach einem Verkehrsereignis angegeben, umfassend die Schritte:
- Starten (6) des Verfahrens auf dem mobilen Endgerät (4);
- Verbinden (8) des Endgerätes (4) mit einer Warnvorrichtung, wobei die Warnvorrichtung zur wenigstens bedarfsweisen Bereitstellung eines Warnsignals an einem Kraftfahrzeug ausgebildet ist;
- Erstellen und Versenden (10) eines Berichts über das Verkehrsereignis auf Basis von Informationen eines von dem Nutzer erstellten Nutzerprofils;
- Versenden (12) einer Benachrichtigung an zumindest eine Kontaktperson.

Es wird ferner ein Computerprogrammprodukt sowie eine Datenverarbeitungsvorrichtung angegeben.

## Beschreibung

Die Erfindung betrifft ein von einem mobilen Endgerät ausgeführtes Verfahren zur Unterstützung eines Nutzers nach einem Verkehrsereignis. Ferner betrifft die Erfindung ein Computerprogrammprodukt sowie eine Vorrichtung zur Datenverarbeitung.

Üblicherweise wird im Straßenverkehr mittels eines Warndreiecks auf ein Verkehrsereignis, wie z.B. auf eine Gefahrensituation wie ein defektes Kraftfahrzeug hingewiesen, wobei das Warndreieck in einem gewissen Abstand zu dem Kraftfahrzeug bzw. der Gefahrensituation positioniert wird, um den nachfolgenden Verkehr zu warnen. Oftmals wird jedoch, auch durch die Einwirkung eines Schocks bedingt, das Sammeln und Aufzeichnen von wichtigen Informationen, die für eine nachträgliche Abwicklung des Verkehrsereignisses wichtig sind, vergessen.

Derartige Informationen sind insbesondere für die Versicherung und/oder Rettungskräfte sowie die Polizei notwendig, um die Ursache oder eine Schadensabwicklung zuverlässig zu ermitteln bzw. zu ermöglichen.

Daher liegt der Erfindung die Aufgabe zugrunde, ein Verfahren, ein Computerprogrammprodukt sowie eine Vorrichtung zur Datenverarbeitung anzugeben, mit deren Hilfe ein Nutzer nach einem Verkehrsereignis unterstützt wird.

Mit Blick auf das Verfahren wird die Aufgabe erfindungsgemäß gelöst durch ein Verfahren mit den Merkmalen des Anspruchs 1. Mit Blick auf das Computerprogrammprodukt wird die Aufgabe erfindungsgemäß gelöst durch ein Computerprogrammprodukt mit den Merkmalen des Anspruchs 12. Mit Blick auf die Vorrichtung wird die Aufgabe erfindungsgemäß gelöst durch eine Vorrichtung zur Datenverarbeitung mit den Merkmalen des Anspruchs 13.

Bevorzugte Ausgestaltungen, Weiterbildungen und Varianten sind Gegenstand der Unteransprüche. Die im Hinblick auf das Verfahren aufgeführten Vorteile und bevorzugten Ausgestaltungen sind sinngemäß auf das Computerprogrammprodukt sowie auf die Vorrichtung zu übertragen und umgekehrt.

Konkret wird die Aufgabe durch ein von einem mobilen Endgerät ausgeführtes Verfahren zur Unterstützung eines Nutzers nach einem Verkehrsereignis gelöst. Hierbei kann unter dem mobilen Endgerät allgemein ein elektronisches Kommunikationsgerät oder ein (tragbarer) Computer verstanden werden. Speziell handelt es sich bei dem mobilen Endgerät beispielsweise um ein Handy (Smartphone), ein Tablet oder um einen Personal Digital Assistent (PDA). Vorzugsweise handelt es sich bei dem mobilen Endgerät um ein mobiles Endgerät des Nutzers.

Wie bereits eingangs erwähnt, kann es sich bei dem Verkehrsereignis um eine Panne oder einen Verkehrsunfall handeln, bei dem das Kraftfahrzeug des Nutzers und/oder Kraftfahrzeuge anderer Verkehrsteilnehmer beteiligt sind.

Das Verfahren umfasst die folgenden Schritte:
Zunächst erfolgt ein Starten des Verfahrens auf dem mobilen Endgerät des Nutzers, indem beispielsweise auf eine Bedienoberfläche eine Startapplikation für das Verfahren aktiviert wird. Unter der Startapplikation kann hierbei beispielsweise ein grafisches Zeichen (Icon) auf der Bedienoberfläche verstanden werden.

Nach dem Starten des Verfahrens wird das mobile Endgerät mit einer Warnvorrichtung verbunden. Die Warnvorrichtung ist zur wenigstens bedarfsweisen Bereitstellung eines Warnsignals an einem Kraftfahrzeug, vorzugsweise an dem Kraftfahrzeug des Nutzes, ausgebildet. Hierzu kann eine Seriennummer der Warnvorrichtung eingegeben werden, sodass zum einen eine eindeutige Identifizierung der zu verbindenden Warnvorrichtung und zum anderen eine Sicherheitsbarriere hinsichtlich eines Missbrauchs des Verfahrens ermöglicht ist.

Unter dem Verbinden kann hierbei eine kommunikative, insbesondere bidirektionale Verbindung zu einem Datenaustausch verstanden werden. Beispielsweise erfolgt die Verbindung mittels einer Nahbereichskommunikation, z.B. Bluetooth. Nach dem Schritt des Verbindens ist das mobile Endgerät somit kommunikativ mit der Warnvorrichtung verbunden. Bei der Warnvorrichtung kann es sich um eine Vorrichtung des Anmelders handeln, die in der unter dem Aktenzeichen EP 3 718 826 A1 veröffentlichten Anmeldung beschrieben ist und auf deren Inhalt hiermit vollumfänglich Bezug genommen wird.

Bei dem Warnsignal kann es sich beispielsweise um ein optisches Warnsignal in Form einer batteriebetriebenen Signalleuchte (z.B. Blinklicht in einer Signalfarbe) handeln.

Ferner wird ein Bericht über das Verkehrsereignis auf Basis von Informationen eines von dem Nutzer erstellten Nutzerprofils erstellt und versendet. Das Nutzerprofil kann beispielsweise bei einer Erstimplementierung, z.B. bei der Erstinstallation, des Verfahrens auf dem mobilen Endgerät erfolgen, sodass die zu diesem Zeitpunkt eingegebenen Informationen für den nachfolgenden Bedarf gespeichert werden. Der Bericht wird ebenfalls gespeichert und kann jederzeit abgerufen und bearbeitet sowie ergänzt werden.

In einem nächsten Schritt erfolgt entweder zusätzlich oder alternativ zum vorherigen Schritt ein Versenden einer Benachrichtigung an zumindest eine Kontaktperson und/oder an einen Rettungsdienst. Unter dem Rettungsdienst können im Rahmen dieser Anmeldung Polizei, Feuerwehr, Sanitäter aber auch Pannendienste verstanden werden. Die Benachrichtigung kann in einem einfachsten Fall eine Information darüber enthalten, dass der Nutzer in ein Verkehrsereignis verwickelt war. Im Rahmen der nachfolgenden Ausführungen wird vereinfachend, jedoch nicht einschränkend die "zumindest eine Kontaktperson" lediglich als "die Kontaktperson" bezeichnet. Es versteht sich jedoch von selbst, dass mit dem vorstehend beschriebenen Verfahrensschritt auch mehrere Kontaktpersonen benachrichtigt werden können. Ferner kann die Benachrichtigung der Kontaktperson in Form einer Textnachricht (z.B. vorab festgelegte Nachricht oder ad hoc) ebenso via Push-Benachrichtigung oder in Form eines Anrufs erfolgen.

Die Schritte des vorstehend erwähnten Verfahrens erfolgen in Reihenfolge und leiten somit den Nutzer nach Art einer "Checkliste" durch die notwendigen Schritte nach dem Verkehrsereignis.

Durch das erfindungsgemäße Verfahren, welches auf dem mobilen Endgerät ausgeführt wird, erhält der Nutzer zum einen eine Unterstützung hinsichtlich der Abwicklung, wie sie nach einem derartigen Verkehrsereignis erfolgen sollte. Zum anderen ist diese Unterstützung für den Nutzer in der Regel immer verfügbar, da sie in Form des Verfahrens z.B. auf dem Smartphone des Nutzers abläuft. Das erfindungsgemäße Verfahren kann somit auch als "persönlicher Safety Assistent" bezeichnet werden. Ferner werden die Schadens- und Unfallberichte durch das Verfahren standardisiert und digitalisiert, was bei der anschließenden Bearbeitung z.B. auf Seiten der Versicherung - insbesondere in einer Zeit der fortschreitenden Digitalisierung und des "Paperless Office" - von Vorteil ist.

In einer Ausführungsform des Verfahrens werden persönliche Angaben des Nutzers zur Erstellung des Nutzerprofils abgefragt, eingegeben und angezeigt. Alternativ oder ergänzend ist das Nutzerprofil auch auf Basis bereits bestehender Nutzerprofile anderer Anbieter und/oder Plattformen (z.B. Google, Facebook, Instagram, Apple-ID, etc.) erstellbar oder um diese Angaben erweiterbar.

In einer weiteren Ausführungsform wird zumindest eine der nachfolgenden persönlichen Angaben zur Erstellung des Nutzerprofils abgefragt, eingegeben und angezeigt:
- vollständiger Name des Nutzers;
- Adresse und Kontaktdaten des Nutzers;
- Informationen über das Fahrzeugmodell des Nutzers;
- Versicherungsdaten des Nutzers;
- Name und/oder Kontaktinformationen der Kontaktperson

Bei den Kontaktdaten des Nutzers kann es sich um die Telefonnummer und/oder die E-Mailadresse und/oder die postalische Adresse und/oder die Personalausweis- und/oder Führerscheinnummer des Nutzers handeln. Ferner ist auch denkbar, dass etwaige Mitgliedschaften in Automobilclubs (ADAC, ACV, etc.) sowie deren Mitgliedsnummer in dem Nutzerprofil gespeichert werden.

Bei den Informationen über das Fahrzeugmodell des Nutzers kann es sich beispielsweise um die Marke, das Modell, die Baureihe und/oder das Kennzeichen und/oder die Farbe des Fahrzeugs handeln. Es ist auch denkbar, Fotos des Fahrzeugs in dem Nutzerprofil zu hinterlegen. Um dem Nutzer die Auswahl der einzelnen Informationen zu erleichtern, steht vorzugsweise eine Datenbank mit vorgespeicherten Fahrzeugmodellen bereit, in der der Nutzer sein eigenes Modell auswählen kann.

Bei den Versicherungsdaten kann es sich beispielsweise um die Nummer des Kfz-Versicherungsscheins und/oder die Telefonnummer oder sonstige Kontaktmöglichkeit der Versicherung des Nutzers handeln.

Bei den Kontaktdaten der Kontaktperson kann es sich beispielsweise um die Telefonnummer und/oder die E-Mailadresse oder sonstige Kontaktmöglichkeiten (soziale Netzwerke, etc.) der Kontaktperson handeln.

Gemäß einer weiteren Ausführungsform werden bei dem Verfahren zumindest eine der nachstehenden Informationen zur Erstellung des Berichts über das Verkehrsereignis, nachfolgend auch als Unfallbericht bezeichnet, abgefragt, eingegeben und angezeigt:
- Fotos von einem Schaden an dem Kraftfahrzeug des Nutzers und/oder einem zweiten Kraftfahrzeug;
- Schilderung des Ereignishergangs, insbesondere eines Unfallhergangs;
- Kontaktdaten zumindest eines weiteren Ereignisbeteiligten, insbesondere Unfallbeteiligten;
- eine geografische Position des Verkehrsereignisses.

Für das Eingeben bzw. Einpflegen der Fotos vom Schaden des Kraftfahrzeugs kann beispielsweise die Kamera des mobilen Endgerätes herangezogen werden und die damit aufgenommenen Fotos genutzt werden. Alternativ oder ergänzend ist es vorgesehen, dass dem Nutzer ein piktogrammartiges Fahrzeug angezeigt wird, an dem er per "Klick" (auf einem Touchscreen: durch Antippen mit dem Finger) die Stellen des Piktogrammfahrzeuges kennzeichnen kann, an denen das reale Fahrzeug beschädigt ist. Ferner ist vorgesehen, dass eine Auflistung von Fahrzeugbauteilen angezeigt wird, aus denen der Nutzer die Bauteile auswählen und markieren kann, die durch das Verkehrsereignis beschädigt wurden. Weiterhin alternativ oder ergänzend können Fotos von der Umgebung, insbesondere von den Straßenverhältnissen und/oder der Straßenführung (z.B. bei einer gefährlichen, schlecht einsehbaren Kurve oder Kreuzung) erstellt und beigefügt werden.

Bei der Schilderung des Ereignishergangs können ebenfalls den Nutzer leitende und damit unterstützende Fragen angezeigt werden.

Bei den Kontaktdaten von weiteren Ereignisbeteiligten, insbesondere Unfallbeteiligten kann es sich vorzugsweise um die gleichen Konkaktdaten handeln, wie die des Nutzers, die vorstehend bereits beschrieben wurden. Auch die Angabe und Eingabe von Zeugen ist mit einbezogen.

Unter der geografischen Position des Verkehrsereignisses kann beispielsweise die Angabe von Koordinaten und/oder die Angabe der Straßennamen und/oder Autobahnkilometern verstanden werden.

Gemäß einer weiteren Ausführungsform erfolgt das Erstellen und insbesondere das Übermitteln des Unfallberichts automatisch, d.h. ohne, dass der Nutzer hierfür gesondert eine Nachricht absenden muss. Für das automatische Erstellen und Versenden des Unfallberichts, werden von dem Verfahren vorzugsweise die bereits vorstehend beschriebenen Daten und Informationen herangezogen. Hierdurch wird der Nutzer in der Abwicklung des Verkehrsereignisses weiter unterstützt. Ferner ist die Position des Verkehrsereignisses auch für die Kontaktpersonen und/oder Rettungskräfte ermittelbar, wenn der Nutzer nach dem Verkehrsereignis ohnmächtig ist und die Position nicht selbstständig übermitteln kann.

Ferner erfolgt gemäß einer weiteren Ausführungsform des Verfahrens ein automatisches Erfassen von Schäden an dem Kraftfahrzeug des Nutzers auf Basis der Fotos, die der Nutzer von seinem Kraftfahrzeug nach dem Verkehrsereignis erstellt hat. Alternativ oder ergänzend können hierzu auch Videoaufnahmen des Kraftfahrzeugs herangezogen werden. Um die Schäden an dem Kraftfahrzeug automatisch zu erfassen, kann beispielsweise eine künstliche Intelligenz, z.B. ein Machine Learning Algorithmus, herangezogen werden. Hierbei vergleicht die künstliche Intelligenz beispielsweise die beschädigte Karosserieform des beschädigten Kraftfahrzeuges mit einer ihr bekannten unbeschädigten Karosserieform des Fahrzeugmodells des Nutzers. Je nach Größe des Unterschieds kann somit auch eine Bewertung der Schwere des Verkehrsereignisses, speziell des Unfalls, bzw. der Schadenseinschätzung des Kraftfahrzeuges erfolgen. Dies ist insbesondere für Versicherungen von Bedeutung, da derartige Informationen in der Regel für die Berechnung eines Reparaturwertes des Fahrzeuges bzw. für die Beurteilung eines zumindest wirtschaftlichen Totalschadens herangezogen werden.

Die Karosserieformen der unbeschädigten Kraftfahrzeuge können beispielsweise auf einem internen Speicher des mobilen Endgerätes oder auf einem Cloudspeicher hinterlegt sein, auf die das Verfahren zugreifen kann. Durch die Eingabe des Fahrzeugtyps durch den Nutzer, weiß das Verfahren dann, welche Karosserieform es im Anwendungsfall heranziehen muss.

In einer weiteren Ausführungsform des Verfahrens erfolgt ein automatisches Analysieren auftretender technischer Defekte des Kraftfahrzeuges des Nutzers. Hierbei analysiert das Verfahren, beispielsweise auch mittels der bereits vorstehend erwähnten künstlichen Intelligenz, welche technischen Defekte an dem Kraftfahrzeug und speziell bei dem Modell des Kraftfahrzeuges des Nutzers auffällig oft auftreten. Diese können anschließend in einer Datenbank hinterlegt und mit anderen Nutzern ausgetauscht werden. Somit ist es möglich, den Nutzer sowie Service-Werkstätte hinsichtlich oft auftretender technischer Defekte des betreffenden Kraftfahrzeugmodells zu unterstützen, sodass diese Bauteile gezielter gewartet oder überprüft werden können. D.h. stellt das Verfahren beispielsweise fest, dass bei einem Kraftfahrzeugmodell die Lichtmaschine oftmals als Grund für eine Panne von dem Nutzer eingegeben wird, so wird dieses Bauteil als anfällig für das entsprechende Kraftfahrzeugmodell hinterlegt und andere Nutzer des gleichen Kraftfahrzeugmodells darüber informiert. Somit erhält der "Safety-Assistent" zusätzlich auch eine "Service-Assistent"-Funktion.

In einer Ausführungsform wird ein Positionsbestimmungssensor, insbesondere ein Positionsbestimmungssensor des mobilen Endgerätes für die Bestimmung der geografischen Position des Verkehrsereignisses herangezogen. Hierdurch ist zum einen eine genauere Positionsbestimmung erreicht und zum anderen kann hierbei das Verfahren bei der automatischen Erstellung des Unfallberichts von selbst auf diese Information zugreifen, ohne dass der Nutzer hierfür eine Aktion ausführen muss. Die Positionsbestimmung kann automatisch erfolgen, ohne dass der Nutzer sie zuerst aktivieren muss. Die automatisch ermittelte geografische Position kann dann dem Nutzer beispielsweise in Echtzeit angezeigt werden. Alternativ oder ergänzend ist es möglich, dass dem Nutzer die nächstgelegenen Werkstätten und/oder Pannendienste auf einer Karte angezeigt werden, auf der auch seine ermittelte Position gekennzeichnet ist. Die automatische Positionsbestimmung unterstützt den Nutzer zum einen, da er die Angabe der geografischen Position nicht vergessen kann und zum anderen wird die Abwicklung des Unfallberichts für den Nutzer weiter vereinfacht.

Gemäß einer weiteren Ausführungsform erfolgt ein Heranziehen eines Beschleunigungssensors (auch als Schocksensor bezeichnet), insbesondere des mobilen Endgerätes und/oder der Warnvorrichtung, zur Detektion des Verkehrsereignisses. Dies ist insbesondere dann der Fall, wenn es sich bei dem Verkehrsereignis um eine Kollision des Kraftfahrzeuges mit einem anderen Verkehrsteilnehmer und/oder einem Gegenstand handelt. Hierbei erfährt der Beschleunigungssensor innerhalb des mobilen Endgerätes bzw. innerhalb der Warnvorrichtung eine (negative) Beschleunigung, die als Kollision gewertet werden kann. Somit kann zum Beispiel im Fall, dass der Nutzer nach dem Verkehrsereignis nicht bei Bewusstsein ist, ein Verkehrsereignis detektiert werden und die Kontaktperson benachrichtigt werden. Mit anderen Worten dient die Aktivierung über den Beschleunigungs-/Schocksensor primär dazu, wenn ein schwerer Unfall passiert ist. Es wird dann automatisch ein Notruf ausgelöst, da der Fahrer bzw. die Insassen höchstwahrscheinlich verletzt wurden und/oder eingeklemmt und/oder ohnmächtig sind etc. und nicht im Stande sind die Warnvorrichtung aufzustellen und die Benachrichtigung selber abzusetzen.

Der Schocksensor reagiert z.B. ab einer gewissen G-Kraft (z.B. 5 G) und es wird automatisch ein Notruf abgesendet sobald innerhalb eines vorbestimmten Zeitinteralls keine Reaktion vom Nutzer auf dem Endgerät erfolgt. (z.B. via Push-Nachricht nach 120 Sekunden).

Alternativ oder ergänzend kann ein automatisches Absetzen eines Notrufsignals an eine Rettungsleitstelle (Polizei, Feuerwehr, Rettungsdienst) erfolgen. Dieser alternative oder ergänzende Schritt kann auch auf Basis des durch den Beschleunigungssensor erfassten Verkehrsereignisses ausgelöst werden.

Ferner erfolgt in einer Ausführungsform des Verfahren ein Ermitteln und Anzeigen eines Batterieladezustands der Warnvorrichtung. Bei dem Batterieladezustand kann es sich beispielsweise um den Ladezustand der Batterie der eingangs erwähnten batteriebetriebenen Signalleuchte der Warnvorrichtung handeln. Hierbei wird dann der Batterieladezustand durch die bidirektional kommunikative Verbindung zwischen dem mobilen Endgerät und der Warnvorrichtung an das mobile Endgerät übermittelt und kann auf diesem angezeigt werden. Somit ist der Batterieladezustand der Warnvorrichtung, z.B. auch im Fall, dass kein Verkehrsereignis vorliegt und die Warnvorrichtung nicht aktiv ist, für den Nutzer zu jedem Zeitpunkt nachvollziehbar und ein rechtzeitiges Aufladen oder ein Batterietausch sichergestellt. Alternativ oder ergänzend ist es auch denkbar, die Signalleuchte durch das Verfahren entweder automatisch oder manuell durch den Nutzer zu aktivieren oder zu deaktivieren und/oder ein Leuchtmuster zu ändern.

Zur Anzeige der vorstehend beschriebenen Verfahrensschritte und/oder Angaben wird gemäß einer Ausführungsform ein Display des mobilen Endgerätes herangezogen. Hierbei kann dann beispielsweise ein Touchscreen des Smartphones des Nutzers sowohl als Anzeige- als auch als Eingabemittel dienen. Somit kann auf ein zusätzliches Display und somit auch auf ein weiteres Endgerät verzichtet werden.

Mit Blick auf das Computerprogrammprodukt wird die Aufgabe erfindungsgemäß gelöst durch ein Computerprogrammprodukt, umfassend Befehle, die bei der Ausführung des Programms durch ein mobiles Endgerät oder durch einen Computer dieses oder diesen veranlassen, das vorstehende Verfahren auszuführen. Bei dem Computerprogrammprodukt kann es sich beispielsweise um eine für Smartphones und/oder Tablets erhältliche App handeln.

Ferner wird mit Blick auf die Datenverarbeitungsvorrichtung die Aufgabe erfindungsgemäß gelöst durch eine Vorrichtung zur Datenverarbeitung, umfassend Mittel zur Ausführung des vorstehenden Verfahrens.

Ausführungsbeispiele der Erfindung werden nachfolgend anhand der Figuren näher erläutert. Diese zeigen in teilweise stark vereinfachten Darstellungen:
- Fig. 1:: ein skizziertes Blockschaltbild der Verfahrensschritte,
- Fig. 2:: eine Abbildung einer Benutzeroberfläche zur Anzeige des Verbindungsstatus mit einer Warnvorrichtung,
- Fig. 3:: eine Abbildung einer Benutzeroberfläche zur Anzeige des Verbindungsstatus, des Batterieladezustands und des Aktivierungsszustands der Warnvorrichtung,
- Fig. 4:: eine Abbildung einer Benutzeroberfläche zur Anzeige und Eingabe der Seriennummer der Warnvorrichtung,
- Fig. 5:: eine Abbildung einer Benutzeroberfläche zum Einpflegen von Fotos eines Verkehrsereignisses,
- Fig. 6:: eine Abbildung einer Benutzeroberfläche zur automatischen Erstellung des Berichts über das Verkehrsereignis,
- Fig. 7:: eine Abbildung einer Benutzeroberfläche zur Eingabe eines Schadensherganges;
- Fig. 8:: eine Abbildung einer Benutzeroberfläche zur Anzeige von wählbaren Notrufnummern und des eigenen Standortes,
- Fig. 9:: eine Abbildung einer Benutzeroberfläche zur Eingabe eines Nutzerprofils, insbesondere der eigenen persönlichen Kontaktdaten,
- Fig. 10:: eine Abbildung einer Benutzeroberfläche zur Eingabe des Nutzerprofils, insbesondere des Fahrzeugtyps des Nutzers sowie
- Fig. 11:: eine Abbildung einer Benutzeroberfläche zur Eingabe von Kontaktdaten einer Kontaktperson.
In den Figuren sind gleichwirkende Teile stets mit den gleichen Bezugszeichen dargestellt.

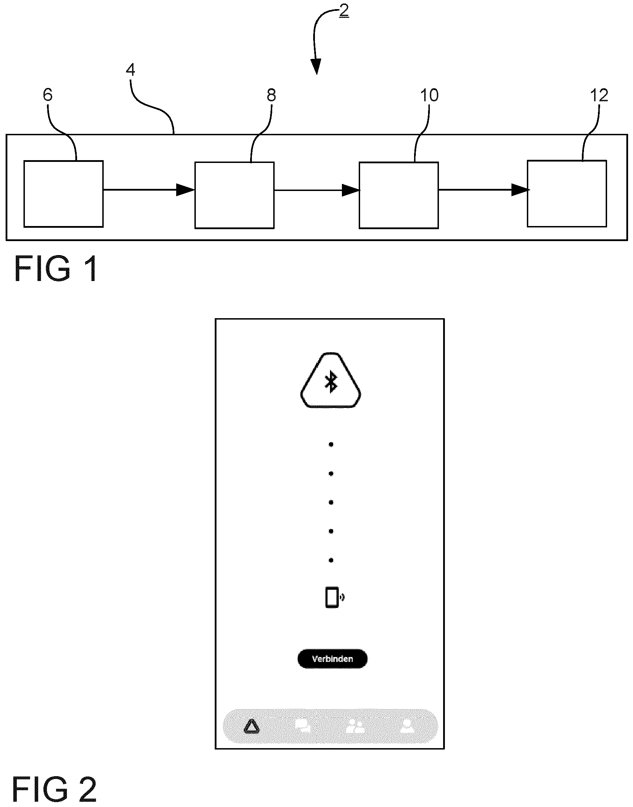

Fig. 1 zeigt ein Blockschaltbild des erfindungsgemäßen Verfahrens 2, welches auf einem mobilen Endgerät 4 ausgeführt wird. Exemplarisch sind die einzelnen Verfahrensschritte des Verfahrens 2 lediglich in Form von Rechtecken dargestellt.

Als erster Schritt 6 des Verfahrens 2 erfolgt ein Starten des Verfahrens 2 auf dem mobilen Endgerät 4.

Der nächste Schritt 8 des Verfahrens 2 umfasst das Verbinden des Endgerätes 4 mit einer nicht dargestellten Warnvorrichtung zur wenigstens bedarfsweisen Bereitstellung eines Warnsignals an einem ebenfalls nicht dargestellten Kraftfahrzeug.

Als nächster Schritt 10 folgt das Erstellen und Versenden eines Berichts über das Verkehrsereignis, z.B: eine Panne oder ein Unfall, auf Basis von Informationen eines von dem Nutzer erstellten Nutzerprofils.

Anschließend erfolgt der Schritt 12 des Versendens einer Benachrichtigung an zumindest eine Kontaktperson und/oder an einen Rettungsdienst.

Fig. 2 zeigt eine Abbildung einer Benutzeroberfläche, die beispielsweise auf einem Display des mobilen Endgerätes 4 des Nutzers angezeigt wird. In Fig. 2 ist die Anzeige eines Verbindungsstatus des mobilen Endgerätes 4 mit der Warnvorrichtung abgebildet. Hierbei symbolisiert das Dreieck am oberen Bildrand die Warnvorrichtung und die gestrichelte Linie die kommunikative, bidirektionale Verbindung zwischen dem Endgerät 4 und der Warnvorrichtung.

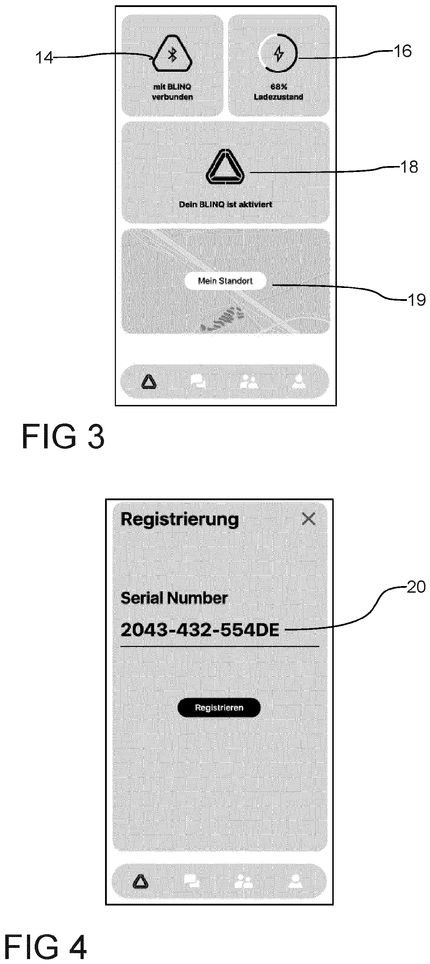

In Fig. 3 ist eine erweiterte Abbildung zu der Abbildung gem. Fig. 2 gezeigt. In dieser Abbildung werden dem Nutzer zum einen eine aktive Verbindung 14 mit der Warnvorrichtung und zum anderen ein Batterieladezustand 16 einer Signalleuchte der Warnvorrichtung angezeigt. Ferner ist ein Aktivitätsstatus 18 der Warnvorrichtung, der z.B. angibt, dass die Warnvorrichtung aufgestellt und in Betrieb genommen wurde und ein Kartenausschnitt 19 dargestellt, der den eigenen Standort anzeigt.

In diesem Zusammenhang zeigt Fig. 4 eine Abbildung der Benutzeroberfläche zur Eingabe der Seriennummer 20 der Warnvorrichtung. Durch die Eingabe der Seriennummer ist zum einen sichergestellt, dass die richtige Warnvorrichtung, nämlich die des Nutzers mit dem mobilen Endgerät 4 verbunden ist. Zum anderen ist hierdurch eine Barriere im Hinblick auf Missbrauch gesetzt.

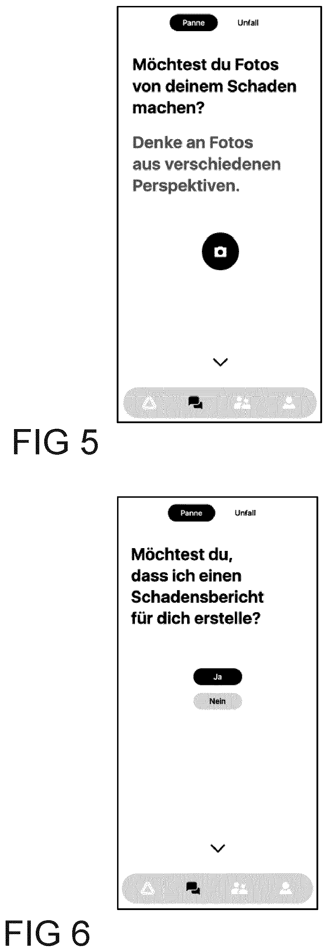

Fig. 5 zeigt eine Abbildung der Benutzeroberfläche, bei der das Verfahren dem Nutzer anbietet, Fotos von dem Verkehrsereignis, z.B. von beschädigten Fahrzeugen, zu machen. Hierdurch wird zum einen die Möglichkeit der Aufnahme von Fotos in das Verfahren integriert und zum anderen kann der Nutzer diesen wichtigen Schritt der Dokumentation nicht vergessen. Zur Aufnahme der Fotos kann das Verfahren beispielsweise auf die Kamera und/oder auf einen internen Fotospeicher des mobilen Endgerätes 4 zugreifen.

In Fig. 6 wird die Benutzeroberfläche gezeigt, wie sie dem Benutzer angezeigt wird, wenn diesem angeboten wird, dass das Verfahren die Erstellung des Berichts über das Verkehrsereignis übernimmt. Im vorliegenden Beispiel handelt es sich um einen Schadensbericht, der von dem Verfahren erstellt werden kann. Die Erstellung des Berichts basiert hierbei auf den bereits erwähnten Informationen und/oder Angaben bzw. beinhaltet diese.

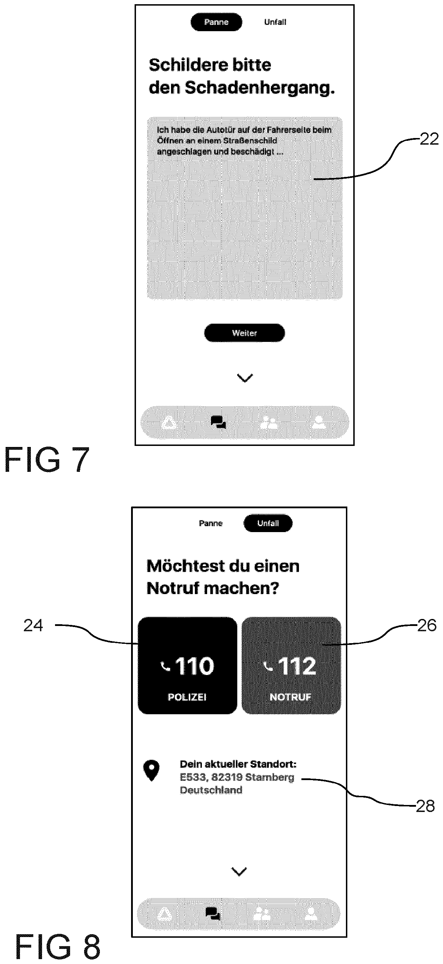

Fig. 7 zeigt die Benutzeroberfläche zum Eingeben eines Schadensherganges durch den Nutzer. Dieser kann in dem vorbereiteten Textfeld 22 entweder per Fließtext oder stichwortartig den Schadenshergang schildern. Dieser wird dann ebenfalls bei der Erstellung des Berichts berücksichtigt. In der Fig. 7 ist ein beispielhafter Schadenshergang in dem Textfeld eingegeben.

In Fig. 8 ist die Benutzeroberfläche zum Absetzen eines Notrufes dargestellt. Auf dieser wird dem Nutzer sowohl die Nummer der Polizei als auch die Nummer des Rettungsdienstes in Form eines Polizei-Icons 24 und eines Rettungs-Icons 26 angezeigt. Durch Antippen eines der beiden Icons 24, 26 wird dann automatisch die jeweilige Nummer gewählt. Zusätzlich wird der Standort des Nutzers in dieser Anzeige in Form eines Koordinaten-Icons 28 dargestellt.

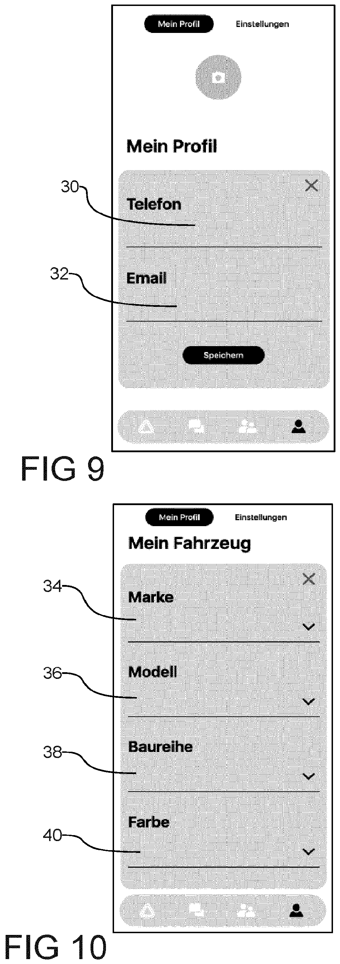

Fig. 9 zeigt die Benutzeroberfläche zur Eingabe der Kontaktdaten des Nutzers. In Fig. 9 werden beispielsweise die Telefonnummer und die E-Mailadresse in jeweils einem Eingabefeld 30, 32.

In Fig. 10 ist die Eingabemöglichkeit der Fahrzeugdaten des Nutzers dargestellt. Hierbei handelt es sich um Angaben wie z.B. Marke 34, Modell 36, Baureihe 38 und Farbe 40.

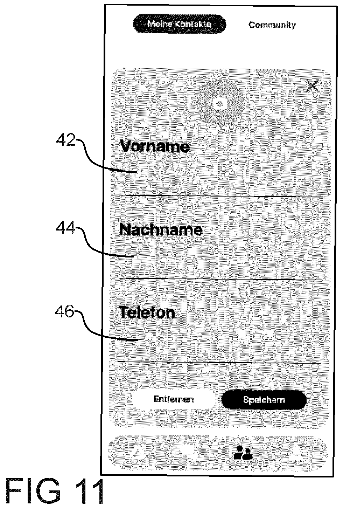

Abschließend ist in Fig. 11 die Benutzeroberfläche zur Eingabe von Kontaktdaten der Kontaktperson dargestellt. Hierbei kann der Nutzer, wie in Fig. 11 gezeigt, den Vornamen 42, den Nachnamen 44 und die Telefonnummer 46 der Kontaktperson eingeben und abspeichern. Es versteht sich von selbst, dass ebenfalls noch weitere Angaben, wie auch bereits im allgemeinen Beschreibungsteil ausgeführt, eingegeben und abgespeichert werden können.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den Ausführungsbeispielen beschriebenen Einzelmerkmale auch auf andere Weise miteinander kombinierbar, ohne den Gegenstand der Erfindung zu verlassen.

### Bezuaszeichenliste

- 2: Verfahren
- 4: mobiles Endgerät
- 6: Starten des Verfahrens auf dem mobilen Endgerät
- 8: Verbinden mit der Warnvorrichtung
- 10: Erstellen und Versenden eines Berichts über das Verkehrsereignis
- 12: Versendens einer Benachrichtigung
- 14: aktive Verbindung mit Warnvorrichtung
- 16: Batterieladezustand der Warnvorrichtung
- 18: Aktivitätsstatus der Warnvorrichtung
- 19: Kartenabschnitt
- 20: Seriennummer der Warnvorrichtung
- 22: Textfeld
- 24: Polizei-Icon
- 26: Rettungs-Icon
- 28: Koordinaten-Icon
- 30: Telefon-Icon
- 32: E-Mail-Icon
- 34: Marke
- 36: Modell
- 38: Baureihe
- 40: Farbe
- 42: Vorname
- 44: Nachname
- 46: Telefon

## Patentansprüche

1. Von einem mobilen Endgerät (4) ausgeführtes Verfahren (2) zur Unterstützung eines Nutzers nach einem Verkehrsereignis, umfassend die Schritte:
- Starten (6) des Verfahrens auf dem mobilen Endgerät (4);
- Verbinden (8) des Endgerätes (4) mit einer Warnvorrichtung, wobei die Warnvorrichtung zur wenigstens bedarfsweisen Bereitstellung eines Warnsignals an einem Kraftfahrzeug ausgebildet ist;
- Erstellen und Versenden (10) eines Berichts über das Verkehrsereignis auf Basis von Informationen eines von dem Nutzer erstellten Nutzerprofils;
- Versenden (12) einer Benachrichtigung an zumindest eine Kontaktperson und/oder an einen Rettungsdienst.

2. Verfahren nach Anspruch 1,
ferner umfassend den Schritt:
Abfragen, Eingeben und Anzeigen von persönlichen Angaben des Nutzers zur Erstellung des Nutzerprofils.

3. Verfahren nach Anspruch 2,
ferner umfassend den Schritt:
Abfragen, Eingeben und Anzeigen von zumindest einer der nachfolgenden persönlichen Angaben zur Erstellung des Nutzerprofils:
- vollständiger Name des Nutzers;
- Adresse und Kontaktdaten des Nutzers;
- Informationen über das Fahrzeugmodell des Nutzers;
- Versicherungsdaten des Nutzers;
- Name und/oder Kontaktinformationen der zumindest einen Kontaktperson.

4. Verfahren nach einem der vorhergehenden Ansprüche,
ferner umfassend den Schritt:
Abfragen, Eingeben, Heranziehen und Anzeigen von zumindest einer der nachfolgenden Informationen zur Erstellung des Berichts über das Verkehrsereignis:
- Fotos von einem Schaden an dem Kraftfahrzeug des Nutzers und/oder einem zweiten Kraftfahrzeug;
- Schilderung des Ereignishergangs, insbesondere eines Unfallhergangs;
- Kontaktdaten zumindest eines weiteren Ereignisbeteiligten, insbesondere Unfallbeteiligten;
- eine geografische Position des Verkehrsereignisses.

5. Verfahren nach einem der vorhergehenden Ansprüche, insbesondere nach Anspruch 4,
**dadurch gekennzeichnet, dass**
der Bericht über das Verkehrsereignis automatisch erstellt wird.

6. Verfahren nach einem der vorhergehenden Ansprüche, insbesondere nach Anspruch 4 oder 5
ferner umfassend die Schritte:
- Automatisches Erfassen von Schäden an dem Kraftfahrzeug des Nutzers auf Basis der Fotos, und
- Automatisches Einpflegen der erfassten Schäden in den Bericht über das Verkehrsereignis.

7. Verfahren nach einem der vorhergehenden Ansprüche,
ferner umfassend die Schritte:
- Automatisches Analysieren auftretendender technischer Defekte des Kraftfahrzeuges des Nutzers, und
- Automatisches Erstellen einer Auflistung über auftretende Defekte des Kraftfahrzeuges des Nutzers zur Unterstützung von Wartungsarbeiten.

8. Verfahren nach einem der vorhergehenden Ansprüche und Anspruch 4, ferner umfassend den Schritt:
Heranziehen eines Positionsbestimmungssensors, insbesondere einen Positionsbestimmungssensor des Endgerätes, zur Bestimmung und Anzeige der geografischen Position des Verkehrsereignisses.

9. Verfahren nach einem der vorhergehenden Ansprüche,
ferner umfassend die Schritte:
- Heranziehen eines Beschleunigungssensors des Endgerätes und/oder der Warnvorrichtung zur Detektion des Verkehrsereignisses, insbesondere einer Kollision und/oder
- Automatisches Absetzen eines Notrufsignals an eine Rettungsleitstelle.

10. Verfahren nach einem der vorhergehenden Ansprüche,
ferner umfassend den Schritt:
Ermitteln und Anzeigen eines Batterieladezustands einer Batterie der Warnvorrichtung.

11. Verfahren nach einem der vorhergehenden Ansprüche,
**dadurch gekennzeichnet, dass**
ein Display des Endgerätes zur Anzeige herangezogen wird.

12. Computerprogrammprodukt, umfassend Befehle, die bei der Ausführung des Programms durch ein mobiles Endgerät oder durch einen Computer dieses oder diesen veranlassen, das Verfahren nach einem der Ansprüche 1 bis 11 auszuführen.

13. Vorrichtung zur Datenverarbeitung, umfassend Mittel zur Ausführung des Verfahrens nach einem der Ansprüche 1 bis 11.
